# EUROPEAN PATENT SPECIFICATION

(11) **EP 4 364 989 B1**
(45) Date of publication and mention of the grant of the patent: **01.10.2025**
(21) Application number: 21950410.7
(22) Date of filing: 19.07.2021
(51) Int. Cl.: B60K 6/36, B60K 6/38, B60W 10/08, B60W 20/00

(54) **ELECTRIC VEHICLE DRIVE SYSTEM AND ELECTRIC VEHICLE**
ANTRIEBSSYSTEM FÜR ELEKTROFAHRZEUG UND ELEKTROFAHRZEUG
SYSTÈME D'ENTRAÎNEMENT DE VÉHICULE ÉLECTRIQUE ET VÉHICULE ÉLECTRIQUE

(43) Date of publication of application: 08.05.2024
(73) Proprietor: Huawei Digital Power Technologies Co., Ltd., Shenzhen, Guangdong 518043 (CN)
(72) Inventor: CHENG, Yang, Shenzhen, Guangdong 518129 (CN); CAO, Yi, Shenzhen, Guangdong 518129 (CN); WEI, Jingzhou, Shenzhen, Guangdong 518129 (CN); MA, Wenwu, Shenzhen, Guangdong 518129 (CN); ZHONG, Hu, Shenzhen, Guangdong 518129 (CN)
(74) Representative: Maiwald GmbH
(86) International application number: PCT/CN2021/107181
(87) International publication number: WO 2023/000144

(56) References cited:
- EP-A1- 2 902 230
- EP-A1- 2 902 235
- CN-A- 104 203 694
- CN-A- 104 276 031
- CN-A- 104 279 311
- CN-A- 104 290 586
- DE-A1- 102018 132 150
- DE-A1- 102019 119 459
- JP-A- 2009 143 263

## Description

### TECHNICAL FIELD

This application relates to the field of vehicle technologies, and in particular, to a hybrid electric vehicle drive system and a hybrid electric vehicle.

### BACKGROUND

With increasingly prominent energy and environmental problems in recent years, a vehicle with fuel as energy has been limited and affected. Compared with a traditional fuel vehicle, an electric vehicle powered by a battery has many advantages, such as energy saving, low pollution and high efficiency. Therefore, the electric vehicle has developed rapidly in recent years.

Currently, the electric vehicle mainly includes two types: a battery-driven electric vehicle and an electric vehicle driven by a combination of a battery and a fuel. As a type of a hybrid electric vehicle, an extended-range hybrid electric vehicle is widely used because a fuel engine can drive a generator to generate electricity and provide the electricity for a battery. However, in an extended-range hybrid solution currently used, a generator can only be configured to generate electricity. Therefore, to implement the hybrid solution, a separate generator needs to be configured on an original drive system. However, the newly added generator occupies a part of vehicle space, reduces available space for passengers, and increases costs of the electric vehicle.

DE 10 2019 119 459 A describes a drive train for a vehicle comprising a main drive and an auxiliary drive, wherein the main drive is assigned to a first axle and the auxiliary drive is assigned to a second axle. The auxiliary drive is a hybrid drive. In an electric driving mode, an electric machine drives an output shaft. In an internal combustion engine driving mode, an internal combustion engine drives the output shaft. In a hybrid driving mode, both the internal combustion engine and the electric machine drive the output shaft. In a recuperation mode, the electric machine acts as a generator and is driven by the output shaft. In a stationary charging mode, the electric machine acts as a generator and is driven by the internal combustion engine.

### SUMMARY

This application provides a hybrid electric vehicle drive system and a hybrid electric vehicle as defined by the appended claims, to reduce driving costs of the electric vehicle, increase space of the electric vehicle, implement a four-wheel drive mode of the electric vehicle, and improve performance of the electric vehicle.

According to a first aspect, an embodiment of this application provides an electric vehicle drive system. The electric vehicle drive system includes a first powertrain, a second powertrain, a first transmission system, a second transmission system, and a battery system.

The first powertrain is connected to the first transmission system, and the first transmission system is in transmission connection to first-side wheels of an electric vehicle. The second powertrain is connected to the second transmission system, and the second transmission system is in transmission connection to second-side wheels of the electric vehicle. The first powertrain includes a generator and an engine, and the engine is configured to drive the generator to generate electric energy, or drive the first-side wheels by using the first transmission system. The generator is configured to drive the first-side wheels by using the first transmission system, or output the generated electric energy to the battery system. The second powertrain is in transmission connection to the second-side wheels by using the second transmission system. The battery system is connected to the generator and the second powertrain, and is configured to receive the electric energy output by the generator, and output stored electric energy to the second powertrain and/or the generator. It should be noted that in a first side and a second side, one side is a front side, and the other side is a rear side. To be specific, the first transmission system is configured to drive front-side wheels of the electric vehicle, and the second transmission system is configured to drive rear-side wheels of the electric vehicle. Alternatively, the first transmission system is configured to drive the rear-side wheels of the electric vehicle, and the second transmission system is configured to drive the front-side wheels of the electric vehicle.

The electric vehicle drive system provided in this application includes two powertrains, and the two powertrains each are in transmission connection to one transmission system. When remaining power of the battery system of the electric vehicle is sufficient, the battery system may simultaneously transmit electric energy to the generator in the first powertrain and the second powertrain. Therefore, the generator is used as an electric motor to drive the first-side wheels by using the first transmission system. When the remaining power of the battery system of the electric vehicle cannot meet a power requirement of the electric vehicle, the electric vehicle may be powered through direct drive of the engine, or the engine may be used to drive the generator to generate electricity to charge the battery system. Therefore, the remaining power of the battery system can meet the power requirement of the electric vehicle. Therefore, in the electric vehicle drive system provided in this application, the generator in the first powertrain may be used as a generator to provide electric energy for the battery system, or may be used as an electric motor to drive the wheels by using the first transmission system. This reduces a quantity of components in the electric vehicle drive system and reduces a volume occupied by the electric vehicle drive system, improves operation efficiency of the vehicle drive system, and simplifies a structure.

The first powertrain further includes a connection assembly.

The engine and the generator are in transmission connection by using the connection assembly. The engine and the first transmission system are in transmission connection by using the connection assembly. The generator and the first transmission system are in transmission connection by using the connection assembly.

The connection assembly includes a first transmission, a second transmission, a first clutch, and a second clutch.

An input shaft of the first transmission is connected to the engine by using the first clutch, and an output shaft of the first transmission is connected to the generator. An input shaft of the second transmission is connected to the generator by using the second clutch, and an output shaft of the second transmission is connected to the first transmission system.

By using the electric vehicle drive system, separation or engagement between two components may be implemented by controlling the clutches.

The generator is connected to the engine by using the first clutch. An input shaft of the first transmission is connected to the generator by using the second clutch, and an output shaft of the first transmission is connected to the first transmission system.

Specifically, when the first clutch is engaged, the generator is connected to the electric motor, the engine may drive the generator to generate electric energy, and the generator outputs the generated electric energy to the battery system. When the second clutch is engaged, the generator is connected to the first transmission system, and the generator may drive the first-side wheels by using the first transmission system. When the first clutch and the second clutch are engaged, the engine is connected to the first transmission system, and the engine may drive the first-side wheels by using the first transmission system.

By using the electric vehicle drive system, there is no acceleration or deceleration between the generator and the engine, thereby reducing power transmission components between the generator and the engine and improving power generation efficiency.

In a possible implementation, the second powertrain includes an electric motor and a third transmission.

The electric motor is connected to the battery system. An input shaft of the third transmission is connected to the electric motor, and an output shaft of the third transmission is connected to the second transmission system.

In a possible implementation, the first transmission includes a speed reducer or a speed increaser.

According to a second aspect, an embodiment of this application provides an electric vehicle. The electric vehicle includes a vehicle body, first-side wheels, second-side wheels, and the electric vehicle drive system in any one of the foregoing technical solutions in this application. In the electric vehicle drive system provided in this application, the generator may also drive the electric vehicle, and generator reuse is implemented. Therefore, the electric vehicle in this application has advantages of improving drive efficiency of the electric vehicle and simplifying a structure.

### BRIEF DESCRIPTION OF DRAWINGS

FIG. 1 is a schematic diagram 1 of a structure of an electric vehicle drive system according to an embodiment of this application;
FIG. 2 is a schematic diagram 2 of a structure of an electric vehicle drive system according to an embodiment of this application;
FIG. 3 is a schematic diagram 1 of power transmission that drives an electric vehicle drive system according to an embodiment of this application;
FIG. 4 is a schematic diagram 2 of power transmission that drives an electric vehicle drive system according to an embodiment of this application;
FIG. 5 is a schematic diagram 3 of power transmission that drives an electric vehicle drive system according to an embodiment of this application;
FIG. 6 is a schematic diagram 4 of power transmission that drives an electric vehicle drive system according to an embodiment of this application;
FIG. 7 is a schematic diagram 3 of a structure that drives an electric vehicle drive system according to an embodiment of this application;
FIG. 8 is a schematic diagram 4 of a structure that drives an electric vehicle drive system according to an embodiment of this application;
FIG. 9 is a schematic diagram 5 of power transmission that drives an electric vehicle drive system according to an embodiment of this application;
FIG. 10 is a schematic diagram 6 of power transmission that drives an electric vehicle drive system according to an embodiment of this application;
FIG. 11 is a schematic diagram 7 of power transmission that drives an electric vehicle drive system according to an embodiment of this application;
FIG. 12 is a schematic diagram 8 of power transmission that drives an electric vehicle drive system according to an embodiment of this application;
FIG. 13 is a schematic diagram 5 of a structure that drives an electric vehicle drive system according to an embodiment of this application;
FIG. 14 is a schematic diagram 6 of a structure that drives an electric vehicle drive system according to an embodiment of this application;
FIG. 15 is a schematic diagram 7 of a structure that drives an electric vehicle drive system according to an embodiment of this application;
FIG. 16 is a schematic diagram 8 of a structure that drives an electric vehicle drive system according to an embodiment of this application;
FIG. 17 is a schematic diagram 9 of power transmission that drives an electric vehicle drive system according to an embodiment of this application;
FIG. 18 is a schematic diagram 10 of power transmission that drives an electric vehicle drive system according to an embodiment of this application;
FIG. 19 is a schematic diagram 11 of power transmission that drives an electric vehicle drive system according to an embodiment of this application; and
FIG. 20 is a schematic diagram 9 of a structure that drives an electric vehicle drive system according to an embodiment of this application.

### DESCRIPTION OF EMBODIMENTS

To make objectives, technical solutions, and advantages of this application clearer, the following further describes this application in detail with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

With development of an electric vehicle, a range requirement of the electric vehicle is increasingly higher. To meet the range requirement of the electric vehicle, an extended-range hybrid electric vehicle is widely used because the extended-range hybrid electric vehicle can provide power for the electric vehicle when remaining power of a battery is insufficient. Specifically, a generator and an engine need to be disposed in the extended-range hybrid electric vehicle. The engine may drive the generator to generate electricity, and output electric energy generated by the generator to a battery. Therefore, when the remaining power of the battery is insufficient, a power requirement of the electric vehicle can be met. However, a generator used for power generation needs to be separately disposed in the extended-range hybrid electric vehicle. Disposing the generator occupies internal space of the electric vehicle, increases power consumption of the electric vehicle, and increases costs of the electric vehicle.

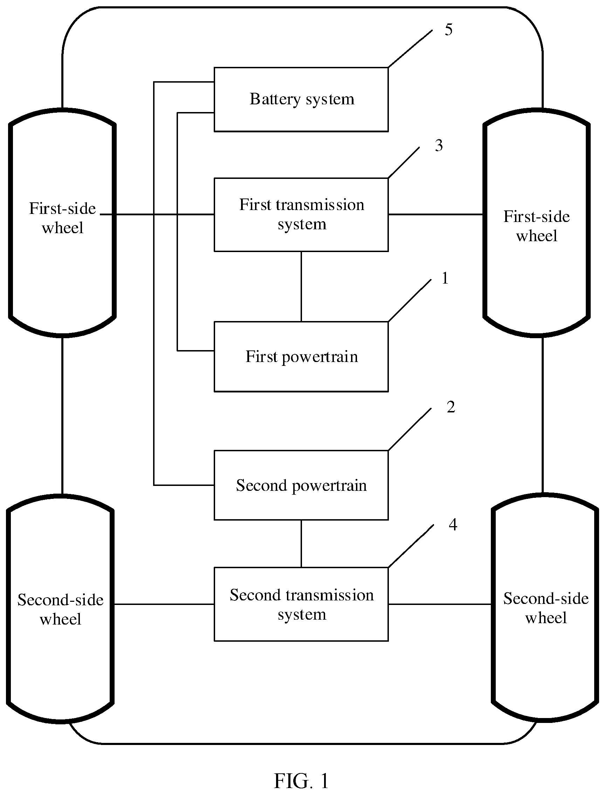

In view of the foregoing problems, embodiments of this application provide an electric vehicle drive system and an electric vehicle. Refer to FIG. 1. The electric vehicle drive system may include a first powertrain 1, a second powertrain 2, a first transmission system 3, a second transmission system 4, and a battery system 5.

The first powertrain 1 is connected to the first transmission system 3, and the first transmission system 3 is in transmission connection to first-side wheels of the electric vehicle. The second powertrain 2 is connected to the second transmission system 4, and the second transmission system 4 is in transmission connection to second-side wheels of the electric vehicle. It should be noted that in this application, in a first side and a second side, one side is a front side, and the other side is a rear side. To be specific, the first transmission system 3 is configured to drive front-side wheels of the electric vehicle, and the second transmission system 4 is configured to drive rear-side wheels of the electric vehicle. Alternatively, the first transmission system 3 is configured to drive the rear-side wheels of the electric vehicle, and the second transmission system 4 is configured to drive the front-side wheels of the electric vehicle.

The first powertrain 1 includes a generator and an engine (not shown). The engine is configured to drive the generator to generate electric energy, or drive the first-side wheels by using the first transmission system 3. The generator is configured to drive the first-side wheels by using the first transmission system 3, or output the generated electric energy to the battery system 5.

The second powertrain 2 is configured to drive the second-side wheels by using the second transmission system 4.

The battery system 5 is connected to the generator and the second powertrain 2, and is configured to receive the electric energy output by the generator, and output stored electric energy to the second powertrain 2 and/or the generator.

By using the electric vehicle drive system, when the electric vehicle is driven, the second powertrain 2 may drive the second-side wheels by using the second transmission system 4, and the generator or engine in the first powertrain 1 may drive the first-side wheels by using the first transmission system 3. In this case, the generator may not only be used as a generator, but also be used as an electric motor to implement generator reuse. Therefore, a generator does not need to be separately configured, and space for configuring the generator does not need to be reserved. Therefore, a quantity of components in the electric vehicle is reduced, a volume occupied by the electric vehicle drive system is reduced, and costs of the electric vehicle are reduced.

In the electric vehicle drive system provided in this application, the first powertrain 1 may be configured to provide power for the electric vehicle, that is, a front-wheel drive mode. The second powertrain 2 may alternatively be configured to provide power for the electric vehicle, that is, a rear-wheel drive mode. To increase output power of the whole vehicle and improve acceleration performance, a four-wheel drive mode may alternatively be used, to be specific, the first powertrain 1 and the second powertrain 2 jointly provide power for the electric vehicle. In this case, the two powertrains may be asynchronous, electrically excited, synchronous, or the like. The electric vehicle drive system may be switched among the front-wheel drive mode, the rear-wheel drive mode, and the four-wheel drive mode.

In specific implementation, the electric vehicle drive system may further include a controller. The controller may be configured to switch the electric vehicle among the front-wheel drive mode, the rear-wheel drive mode, and the four-wheel drive mode, and control power output by the electric vehicle in each mode.

In a possible implementation, the first powertrain 1 further includes a connection assembly. Specifically, the engine and the generator are in transmission connection by using the connection assembly. The engine and the first transmission system 3 are in transmission connection by using the connection assembly. The generator and the first transmission system 3 are in transmission connection by using the connection assembly.

The following further describes, by using specific embodiments, an architecture of the electric vehicle drive system provided in this application as an example. It should be noted that, embodiments of this application are intended to better explain the present invention, but are not intended to limit the present invention.

### Example 1

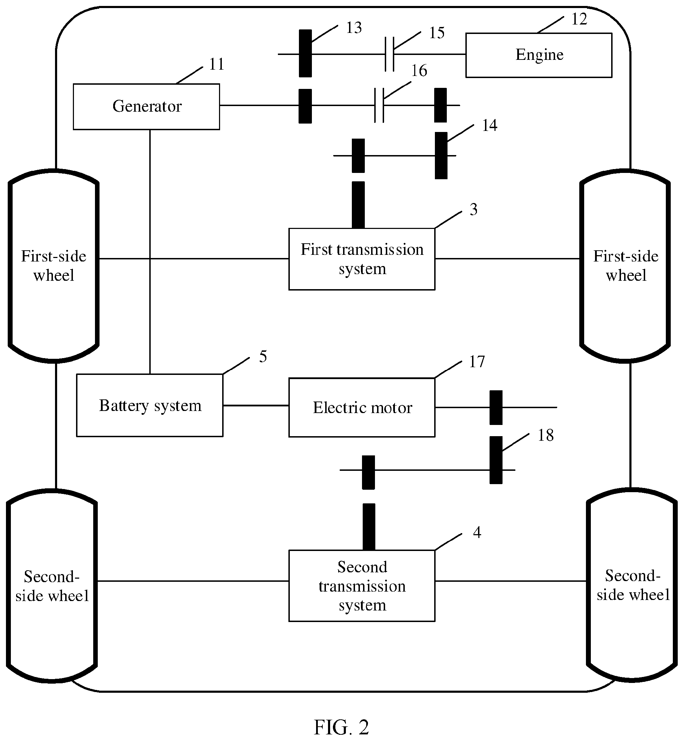

FIG. 2 shows an example of a schematic diagram of a structure of an electric vehicle drive system according to an embodiment of this application. Refer to FIG. 2. In this embodiment of this application, a first powertrain 1 may include a generator 11, an engine 12, a first transmission 13, a second transmission 14, a first clutch 15, and a second clutch 16. A second powertrain 2 includes an electric motor 17 and a third transmission 18. The first transmission 13, the second transmission 14, the first clutch 15, and the second clutch16 constitute a connection assembly.

It should be understood that, when the first clutch 15 is engaged, the generator 11 is connected to the engine 12. In this case, the engine 12 may drive the generator 11 to generate electric energy, and the generator 11 may output the generated electric energy to a battery system 5. When the second clutch 16 is engaged, the generator 11 may be connected to a first transmission system 3, and the generator 11 may drive first-side wheels by using the first transmission system 3. When the first clutch 15 and the second clutch 16 are engaged, the engine 12 may be connected to the first transmission system 3, and the engine 12 may drive the first-side wheels by using the first transmission system 3.

In specific implementation, an input shaft of the first transmission 13 is connected to the engine 12 by using the first clutch 15, and an output shaft of the first transmission 13 is connected to the generator 11. An input shaft of the second transmission 14 is connected to the generator 11 by using the second clutch 15, and an output shaft of the second transmission 14 is connected to the first transmission system 3. An input shaft of the third transmission 18 is connected to the electric motor 17, and an output shaft of the third transmission system18 is connected to a second transmission system 4. Both the first generator 11 and the electric motor 17 are connected to the battery system 5.

The first transmission 13 may be a speed reducer, or may be a speed increaser, and both the second transmission 14 and the third transmission 18 are speed reducers. It should be noted that the first transmission 13, the second transmission 14, and the third transmission may be single-speed transmissions, or may be multi-speed transmissions. The first transmission 13, the second transmission 14, and the third transmission may be fixed shaft gear trains or planetary gear trains.

In specific implementation, the first clutch 15 may be a one-way clutch. The second clutch 16 may be disposed inside the second transmission 14, and the first clutch 15 may also be disposed inside the first transmission 13. It should be understood that, in this application, the first clutch 15 and the second clutch 16 each may alternatively be replaced by another apparatus with power engagement and disengagement, for example, a synchronizer or a gear sleeve.

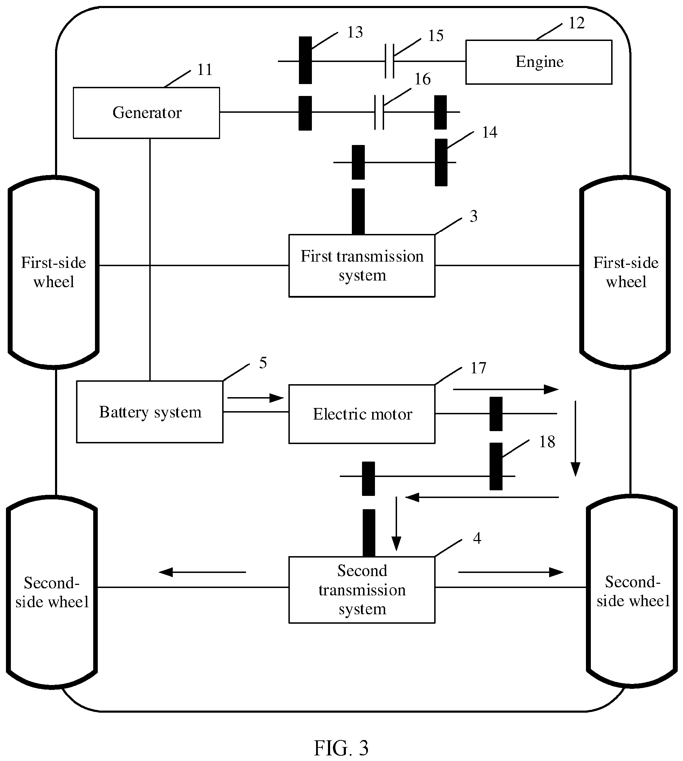

The following describes a drive mode of the electric vehicle drive system with reference to FIG. 2. Details are as follows:
When an electric vehicle runs normally, if a remaining capacity of the battery system 5 can meet a current power requirement of the electric vehicle, and the electric vehicle has a low power requirement, the battery system 5 may output stored electric energy to the electric motor 17, and the electric motor 17 rotates and is driven to the third transmission 18 by using the input shaft of the third transmission 18. Power is output to the output shaft of the third transmission 18 through gear transmission inside the third transmission 18, and is supplied to the electric vehicle for running by using the second transmission system 4. Specifically, for a power transmission path of the electric vehicle, refer to FIG. 3.

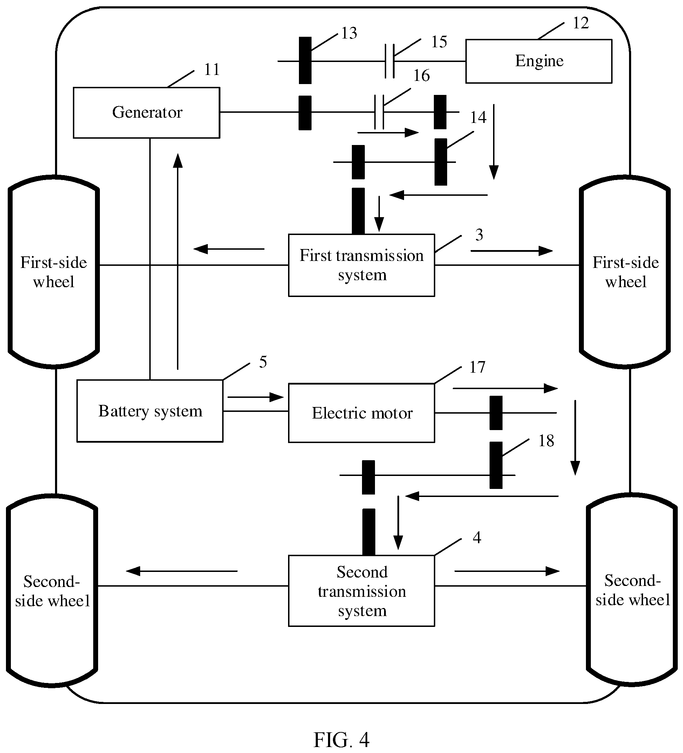

When the electric vehicle runs normally, if the remaining capacity of the battery system 5 can meet the current power requirement of the electric vehicle, and the electric vehicle has a high power requirement, the battery system 5 may output the stored electric energy to the electric motor 17, and the electric motor 17 rotates and is driven to the third transmission 18 by using the input shaft of the third transmission 18. Power is output to the output shaft of the third transmission 18 through gear transmission inside the third transmission 18, and is supplied to the electric vehicle for running by using the second transmission system 4. At the same time, the second clutch 16 controls the generator 11 to engage with the second transmission 14, and the battery system 5 outputs the stored electric energy to the generator 11. The generator 11 rotates as an electric motor and is driven to the second transmission 14 by using the input shaft of the second transmission 14. Power is output to the output shaft of the second transmission 14 through gear transmission inside the second transmission 14, and is supplied to the electric vehicle for running by using the first transmission system 3. Specifically, for a power transmission path of the electric vehicle, refer to FIG. 4.

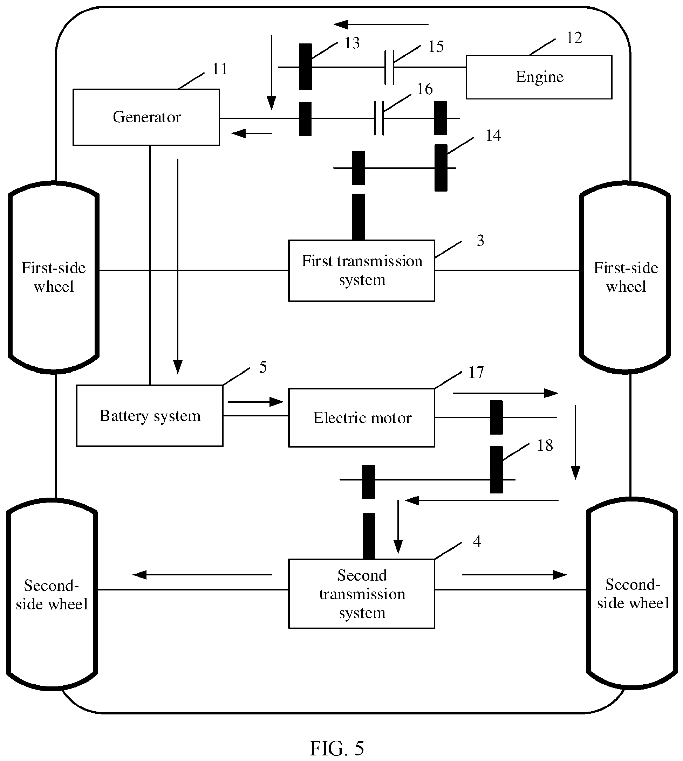

When the electric vehicle runs normally, if the remaining capacity of the battery system 5 cannot meet the current power requirement of the electric vehicle, and the electric vehicle has a low power requirement, the first clutch 15 controls the engine 12 to engage with the first transmission 13, the engine 12 drives the generator 11 to rotate, and the generator 11 generates the electric energy and outputs the generated electric energy to the connected battery system 5. At the same time, the battery system 5 outputs the stored electric energy to the electric motor 17, and the electric motor 17 rotates and is driven to the third transmission 18 by using the input shaft of the third transmission 18. Power is output to the output shaft of the third transmission 18 through gear transmission inside the third transmission 18, and is supplied to the electric vehicle for running by using the second transmission system 4. Specifically, for a power transmission path of the electric vehicle, refer to FIG. 5.

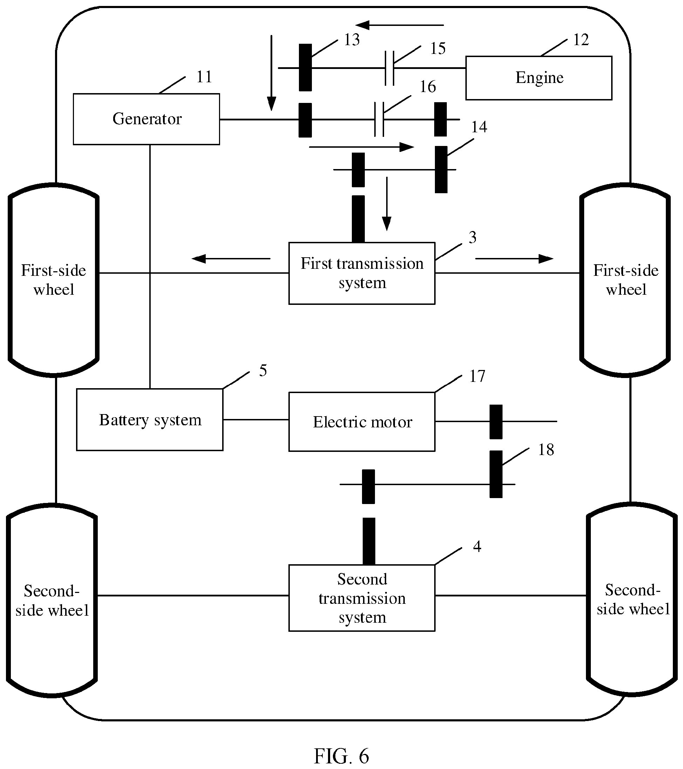

When the electric vehicle runs normally, if the electric vehicle has a high power requirement or to achieve high drive efficiency, the first clutch 15 controls the engine 12 to engage with the first transmission 13, and the second clutch 16 controls the first transmission 13 to engage with the second transmission 14. Power output by the engine 12 is sequentially input to the first transmission 13 and the second transmission 14. Power is output to the output shaft of the second transmission 14 through gear transmission inside the first transmission 13 and the second transmission 14, and is supplied to the electric vehicle for running by using the first transmission system 3. Specifically, for a power transmission path of the electric vehicle, refer to FIG. 6.

In actual use, to eliminate vibration in a driving process of the electric vehicle and improve driving experience of a driver, a shock absorber, for example, a torque shock absorber or a dual-mass flywheel, may be further connected between the generator 11 and the first clutch 15.

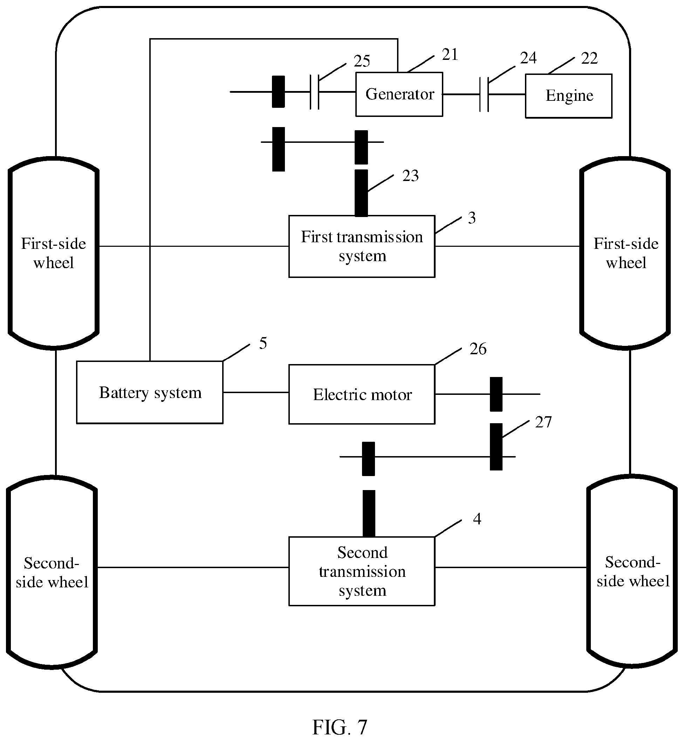

With reference to FIG. 2 and FIG. 6, in the foregoing embodiment, the engine and the generator may be at a same speed. In this case, as shown in FIG. 7, a first powertrain 1 may include a generator 21, an engine 22, a first transmission 23, a first clutch 24, and a second clutch 25. A second powertrain 2 may include an electric motor 26 and a third transmission 27. The first transmission 23, the first clutch 24, and the second clutch 25 constitute a connection assembly.

In specific implementation, the engine 22 is connected to the generator 21 by using the first clutch 24. An input shaft of the first transmission 23 is connected to the generator 21 by using the second clutch 25, and an output shaft of the first transmission 23 is connected to the first transmission system 3. An input shaft of the third transmission 27 is connected to the electric motor 26, and an output shaft of the third transmission 2 is connected to the second transmission system 4. Both the first generator 21 and the electric motor 26 are connected to the battery system 5.

It should be understood that when the first clutch 24 is engaged, the engine 22 may be connected to the generator 21. In this case, the engine 22 drives the generator 21 to generate electric energy, and the generator 21 may output the generated electric energy to the battery system 5. When the second clutch 25 is engaged, the generator 21 may be connected to the first transmission system 3, and the generator 21 may drive the first-side wheels by using the first transmission system 3. When the first clutch 24 and the second clutch 25 are engaged, the engine 22 may be connected to the first transmission system 3, and in this case, the engine 22 drives the first-side wheels by using the first transmission system 3.

### Example 2

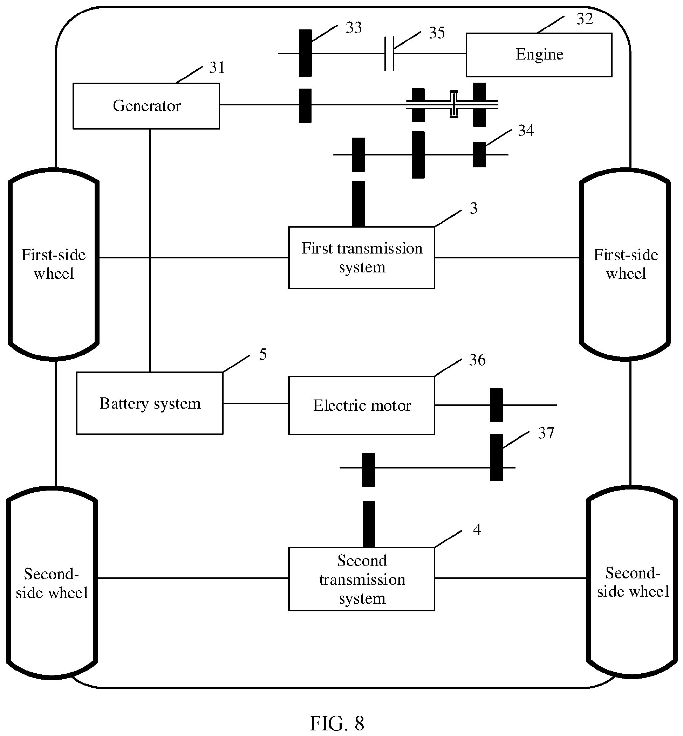

FIG. 8 shows an example of a schematic diagram of a structure of an electric vehicle drive system according to an embodiment of this application. Refer to FIG. 8. In this embodiment of this application, a first powertrain 1 may include a generator 31, an engine 32, a first transmission 33, a second transmission 34, and a first clutch 35. A second powertrain 2 includes an electric motor 36 and a third transmission 37.

In specific implementation, an input shaft of the first transmission 33 is connected to the engine 32 by using the first clutch 35, and an output shaft of the first transmission 33 is connected to the engine 31. An input shaft of the second transmission 34 is connected to the generator 31, and an output shaft of the second transmission 34 is connected to a first transmission system 3. An input shaft of the third transmission 37 is connected to the electric motor 36, and an output shaft of the third transmission 37 is connected to a second transmission system 4. Both the first generator 31 and the electric motor 36 are connected to a battery system 5.

It should be understood that, when the first clutch 35 is engaged, the engine 32 may be connected to the generator 31. In this case, the engine 32 may drive the generator 31 to generate electric energy, and the generator 31 may output the generated electric energy to the battery system 5. When a synchronizer connects the generator 31 to the first transmission system 3, the generator 31 may drive first-side wheels by using the first transmission system 3. When the first clutch 35 is engaged and the synchronizer connects the generator 31 to the first transmission system 3, the engine 32 may be connected to the first transmission system 3, and in this case, the engine 32 may drive the first-side wheels by using the first transmission system.

The first transmission 33 may be a speed reducer or a speed increaser. The second transmission 34 and the third transmission 37 are speed reducers. It should be noted that the first transmission 33 and the third transmission 37 may be single-speed transmissions, or may be multi-speed transmissions. The first transmission 33, the second transmission 34, and the third transmission 37 may be fixed shaft gear trains or planetary gear trains.

It should be noted that a synchronizer is disposed inside the second transmission 34, and coupling teeth of the synchronizer may be disposed on a two-stage transmission gear of the second transmission 34, to implement that the second transmission 34 is in a neutral state. When the second transmission 34 is in a non-neutral state, the generator 31 is engaged with the first transmission system 3 by using the second transmission 34, and when the second transmission 34 is in the neutral state, engagement between the generator 31 and the first transmission system 3 is cut off.

In specific implementation, the first clutch 35 may be a one-way clutch. The first clutch 35 may also be disposed in the first transmission 33. It should be understood that, in this application, the first clutch 15 may alternatively be replaced by another apparatus with power engagement and disengagement, for example, a synchronizer or a gear sleeve.

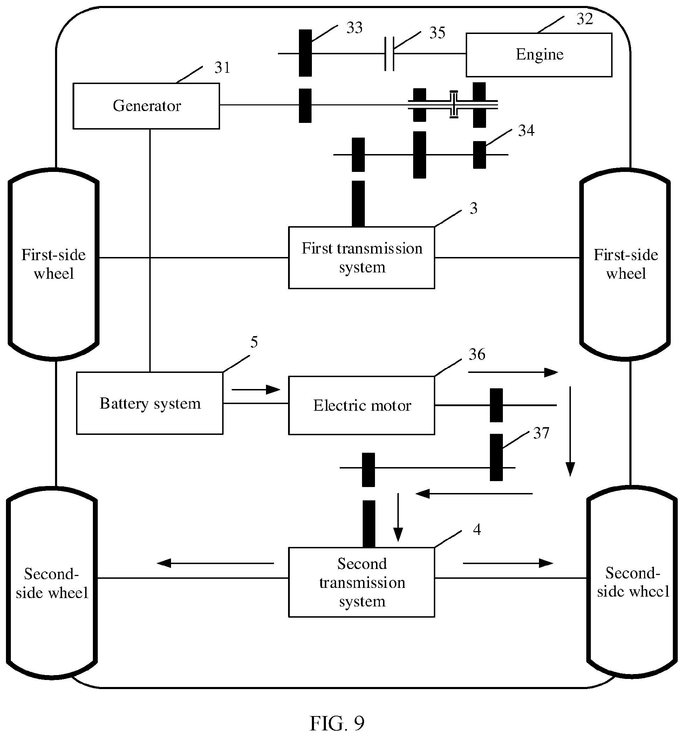

The following describes a drive mode of the electric vehicle drive system with reference to FIG. 8. Details are as follows:
When an electric vehicle runs normally, if a remaining capacity of the battery system 5 can meet a current power requirement of the electric vehicle, and the electric vehicle has a low power requirement, the battery system 5 may output stored electric energy to the electric motor 36, and the electric motor 36 rotates and is driven to the third transmission 37 by using the input shaft of the third transmission 37. Power is output to the output shaft of the third transmission 37 through gear transmission inside the third transmission 37, and is supplied to the electric vehicle for running by using the second transmission system 4. Specifically, for a power transmission path of the electric vehicle, refer to FIG. 9.

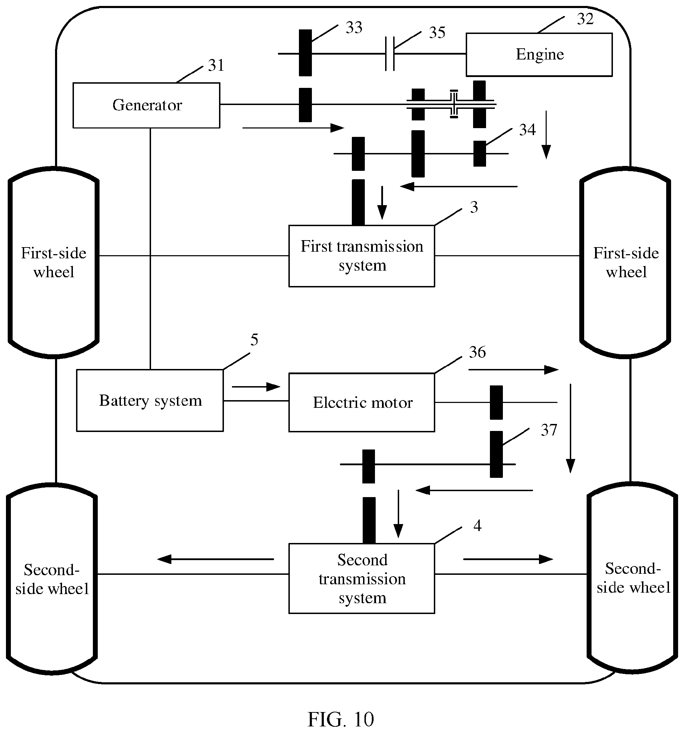

When the electric vehicle runs normally, if the remaining capacity of the battery system 5 can meet the current power requirement of the electric vehicle, and the electric vehicle has a high power requirement, the battery system 5 may output the stored electric energy to the electric motor 36, and the electric motor 36 rotates and is driven to the third transmission 37 by using the input shaft of the third transmission 37. Power is output to the output shaft of the third transmission 37 through gear transmission inside the third transmission 37, and is supplied to the electric vehicle for running by using the second transmission system 4. At the same time, the battery system 5 outputs the stored electric energy to the generator 31, and the generator 31 rotates as an electric motor and is driven to the second transmission 34 by using the input shaft of the second transmission 34. Power is output to the output shaft of the second transmission 34 through gear transmission inside the second transmission 34, and is supplied to the electric vehicle for running by using the first transmission system 3. Specifically, for a power transmission path of the electric vehicle, refer to FIG. 10.

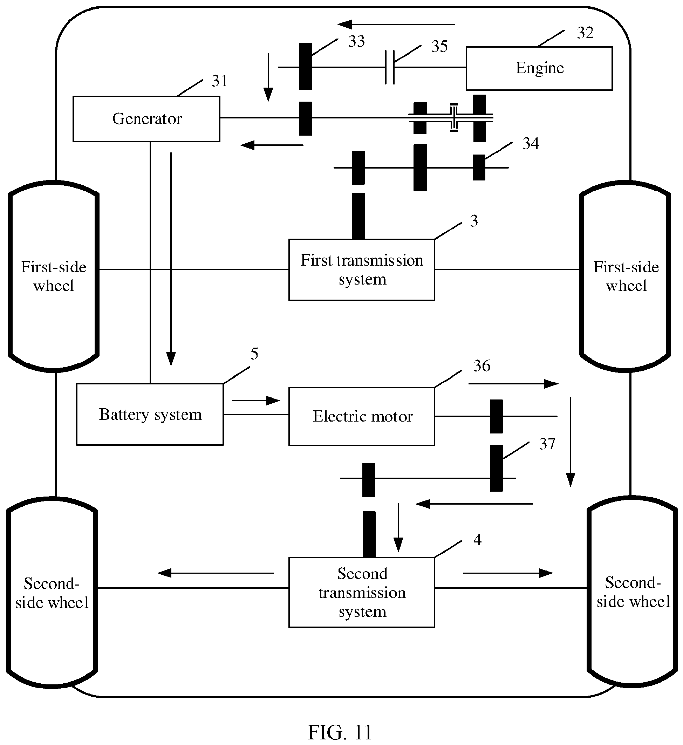

When the electric vehicle runs normally, if the remaining capacity of the battery system 5 cannot meet the current power requirement of the electric vehicle, and the electric vehicle has a low power requirement, the first clutch 35 controls the engine 32 to engage with the first transmission 33, the engine 32 drives the generator 31 to rotate, and the generator 31 generates electric energy and outputs the generated electric energy to the connected battery system 5. At the same time, the battery system 5 outputs the stored electric energy to the electric motor 36, and the electric motor 36 rotates and is driven to the third transmission 37 by using the input shaft of the third transmission 37. Power is output to the output shaft of the third transmission 37 through gear transmission inside the third transmission 37, and is supplied to the electric vehicle for running by using the second transmission system 4. Specifically, for a power transmission path of the electric vehicle, refer to FIG. 11.

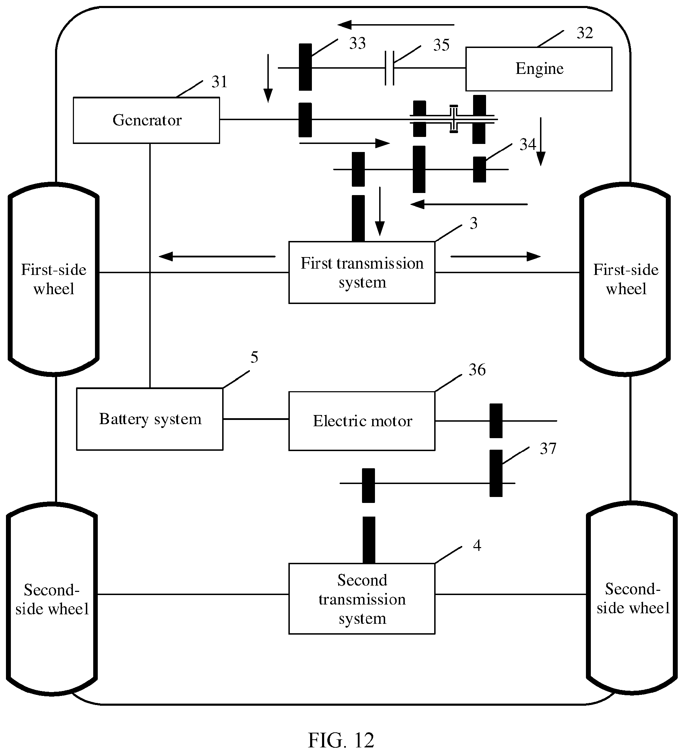

When the electric vehicle runs normally, if the electric vehicle has a high power requirement or to achieve high drive efficiency, the first clutch 35 controls the engine 32 to engage with the first transmission 33, and power output by the engine 32 is sequentially input to the first transmission 33 and the second transmission 34. Power is output to the output shaft of the second transmission 34 through gear transmission inside the first transmission 33 and the second transmission 34, and is supplied to the electric vehicle for running by using the first transmission system 3. Specifically, for a power transmission path of the electric vehicle, refer to FIG. 12.

In actual use, to eliminate vibration in a driving process of the electric vehicle and improve driving experience of a driver, a shock absorber, for example, a torque shock absorber or a dual-mass flywheel, may be further connected between the generator 31 and the first clutch 35.

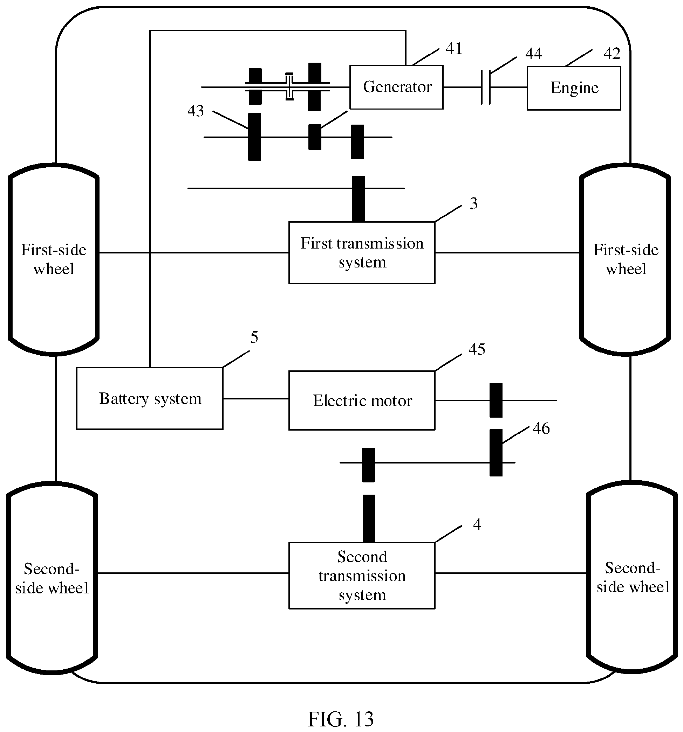

With reference to FIG. 8 and FIG. 12, in the foregoing embodiment, the engine and the generator may be at a same speed. In this case, as shown in FIG. 13, a first powertrain 1 includes a generator 41, an engine 42, a first transmission 43, and a first clutch 44. A second powertrain 2 may include an electric motor 45 and a third transmission 46. The first transmission 43 and the first clutch 44 constitute a connection assembly.

In specific implementation, as shown in FIG. 13, the generator 41 is connected to the engine 42 by using the first clutch 45. An input shaft of the first transmission 43 is connected to the generator 41, and an output shaft of the first transmission 43 is connected to the first transmission system 3. An input shaft of the third transmission 46 is connected to the electric motor 45, and an output shaft of the third transmission 46 is connected to the second transmission system 4. Both the first generator 41 and the electric motor 45 are connected to the battery system 5.

It should be understood that, when the first clutch 44 is engaged, the engine 42 may be connected to the generator 41. In this case, the engine 42 may drive the generator 41 to generate electric energy, and the generator 41 may output the generated electric energy to the battery system 5. When a synchronizer connects the generator 41 to the first transmission system 3, the generator 41 may drive the first-side wheels by using the first transmission system 3. When the first clutch 44 is engaged and the synchronizer connects the generator 41 to the first transmission system 3, the engine 42 may be connected to the first transmission system 3, and in this case, the engine 42 may drive the first-side wheels by using the first transmission system 3.

### Example 3:

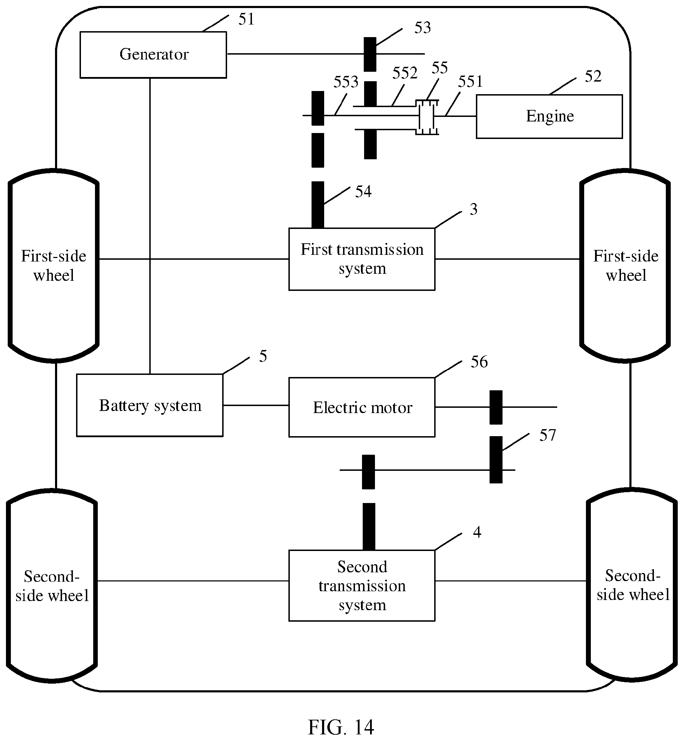

FIG. 14 shows an example of a schematic diagram of a structure of an electric vehicle drive system according to an embodiment of this application. Refer to FIG. 14. In this embodiment of this application, a first powertrain 1 may include a generator 51, an engine 52, a first transmission 53, a second transmission 54, and a dual clutch 55. A second powertrain 2 may include an electric motor 56 and a third transmission 57. The first transmission 53, the second transmission 54, and the dual clutch 55 constitute a connection assembly. The dual clutch 55 includes three ports, namely, a port 551, a port 552, and a port 553.

In specific implementation, an input shaft of the first transmission 53 is connected to the engine 52, and an output shaft of the first transmission 53 is connected to the port 552 of the dual clutch 55. An input shaft of the second transmission 54 is connected to the port 553 of the dual clutch 55, and an output shaft of the second transmission 54 is connected to a first transmission system 3. The port551 of the dual clutch 55 is connected to the generator 51. An input shaft of the third transmission 57 is connected to the electric motor 56, and an output shaft of the third transmission 57 is connected to a second transmission system 4. Both the first generator 51 and the electric motor 56 are connected to a battery system 5.

It should be understood that, when the port 552 and the port 551 in the dual clutch 55 are engaged, the generator 51 is connected to the engine 52 by using the first transmission 53. In this case, the engine 52 may drive the generator 51 to generate electric energy, and the generator 51 may output the generated electric energy to the battery system 5. When the port 552 and the port 553 in the dual clutch 55 are engaged, the generator 51 may be connected to the first transmission system 3 by using the first transmission 53 and the second transmission 54, and the generator 51 may drive first-side wheels by using the first transmission system 3. When the port 551 and the port 553 in the dual clutch 55 are engaged, the engine 52 may be connected to the first transmission system 3 by using the second transmission 54, and the engine 52 may drive the first-side wheels by using the first transmission system 3.

The first transmission 53 may be a speed reducer, or may be a speed increaser, and both the second transmission 54 and the third transmission 57 are speed reducers. It should be noted that the first transmission 53, the second transmission 54, and the third transmission 57 may be single-speed transmissions, or may be multi-speed transmissions. The first transmission 53, the second transmission 54, and the third transmission 57 may be fixed shaft gear trains or planetary gear trains.

In specific implementation, the dual clutch 55 may be disposed in the first transmission 53. It should be understood that the dual clutch 55 in this application may alternatively be replaced by another apparatus with power engagement and disengagement, for example, a synchronizer or a gear sleeve.

It should be noted that a drive mode of the electric vehicle drive system shown in FIG. 14 is the same as a drive mode shown in FIG. 2, and is not repeatedly described in this application.

In actual use, to eliminate vibration in a driving process of an electric vehicle and improve driving experience of a driver, a shock absorber, for example, a torque shock absorber or a dual-mass flywheel, may be further connected between the generator 51 and the dual clutch 55.

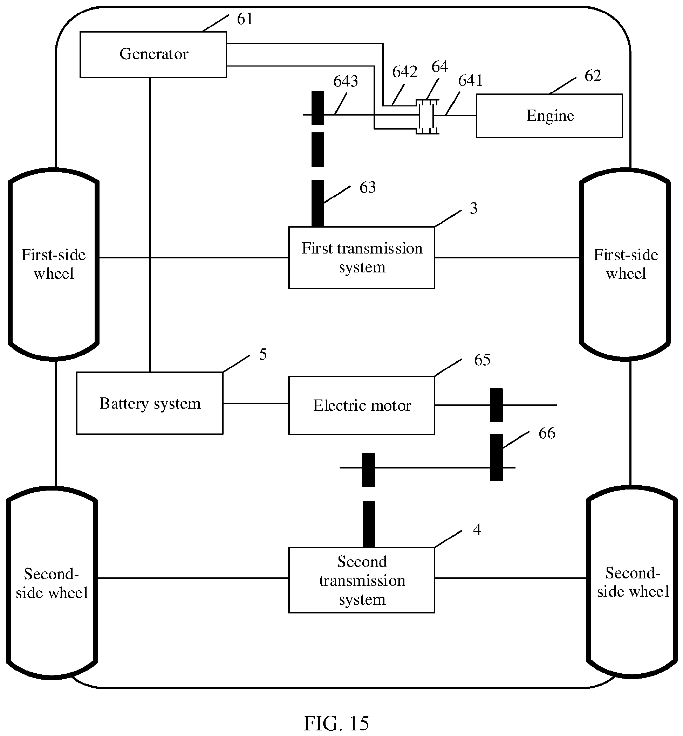

With reference to FIG. 8 and FIG. 12, in the foregoing embodiment, the engine and the generator may be at a same speed. In this case, as shown in FIG. 15, a first powertrain 1 may include a generator 61, an engine 62, a first transmission 63, and a dual clutch 64. A second powertrain 2 may include an electric motor 65 and a third transmission 66. The first transmission 63 and the dual clutch 64 constitute a connection assembly. The dual clutch 64 includes three ports, namely, a port 641, a port 642, and a port 643.

In specific implementation, the generator 61 is connected to the engine 62 by using the dual clutch 64. An input shaft of the first transmission 63 is connected to the engine 62 and the generator 61 by using the dual clutch 64, and an output shaft of the first transmission 63 is connected to the first transmission system 3. An input shaft of the third transmission 66 is connected to the electric motor 65, and an output shaft of the third transmission 66 is connected to the second transmission system 4. Both the generator 61 and the electric motor 65 are connected to the battery system 5.

It should be understood that, when the port 641 and the port 642 in the dual clutch 64 are engaged, the generator 61 is connected to the engine 62. In this case, the engine 62 may drive the generator 61 to generate electric energy, and the generator 61 may output the generated electric energy to the battery system 5. When the port 643 and the port 642 in the dual clutch 64 are engaged, the generator 61 may be connected to the first transmission system 3 by using the first transmission system 63, and the generator 61 may drive the first-side wheels by using the first transmission system 3. When the port 641 and the port 643 in the dual clutch 64 are engaged, the engine 62 may be connected to the first transmission system 3 by using the first transmission system 63, and in this case, the engine 62 may drive the first-side wheels by using the first transmission system 3.

### Example 4:

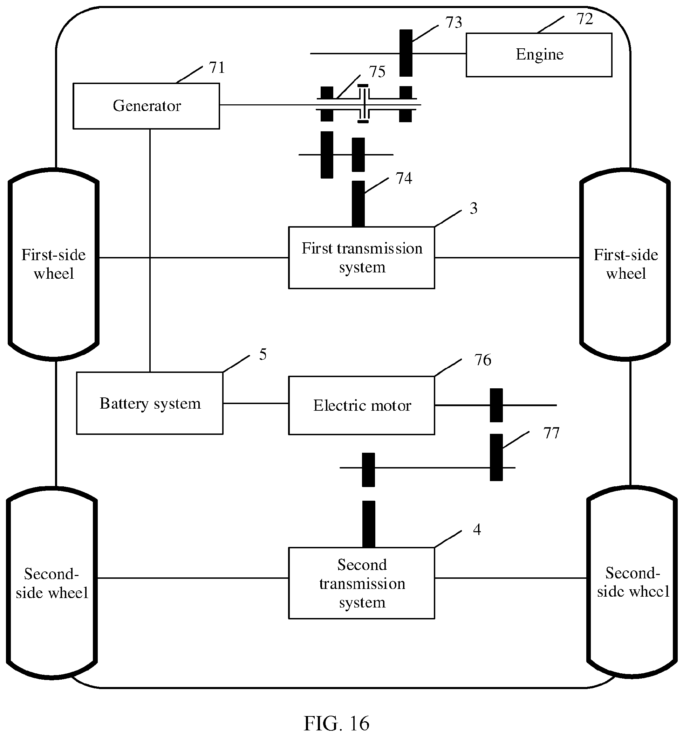

FIG. 16 shows an example of a schematic diagram of a structure of an electric vehicle drive system according to an embodiment of this application. Refer to FIG. 16. In this embodiment of this application, a first powertrain 1 may include a generator 71, an engine 72, a first transmission 73, a second transmission 74, and a synchronizer 75. A second powertrain 2 may include an electric motor 76 and a third transmission 77. The first transmission 73, the second transmission 74 and the synchronizer 75 constitute a connection assembly.

In specific implementation, coupling teeth of the synchronizer 75 are separately connected to an output shaft of the first transmission 73 and an input shaft of the second transmission 74, and a gear hub of the synchronizer 75 is connected to the generator 11. An input shaft of the first transmission 73 is connected to the engine 72. The input shaft of the second transmission 74 is connected to the generator 71, and an output shaft of the second transmission 74 is connected to a first transmission system 3. An input shaft of the third transmission 77 is connected to the electric motor 76, and an output shaft of the third transmission 77 is connected to a second transmission system 4. Both the first generator 71 and the electric motor 76 are connected to a battery system 5.

It should be understood that, when the synchronizer 75 connects the engine 72 to the generator 71, the engine 72 may drive the generator 71 to generate electric energy, and the generator 71 may output the generated electric energy to the battery system 5. When the synchronizer 75 connects the generator 71 to the first transmission system 3, the generator 71 drives first-side wheels by using the first transmission system 3.

The first transmission 73 may be a speed reducer, or may be a speed increaser, and both the second transmission 74 and the third transmission 77 are speed reducers. It should be noted that the first transmission 73, the second transmission 74, and the third transmission 77 may be single-speed transmissions, or may be multi-speed transmissions. The first transmission 73, the second transmission 74, and the third transmission 77 may be fixed shaft gear trains or planetary gear trains.

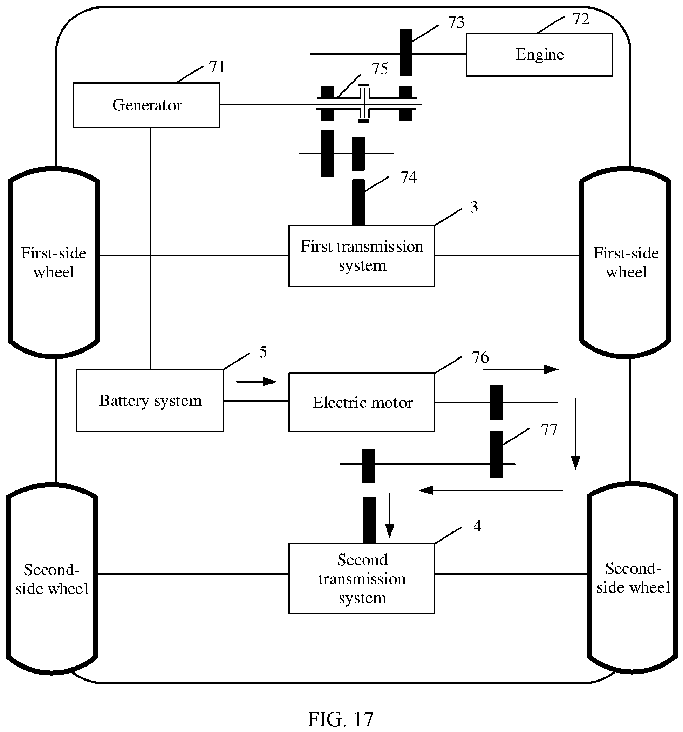

The following describes a drive mode of the electric vehicle drive system with reference to FIG. 16. Details are as follows:
When an electric vehicle runs normally, if a remaining capacity of the battery system 5 can meet a current power requirement of the electric vehicle, and the electric vehicle has a low power requirement, the battery system 5 may output stored electric energy to the electric motor 76, and the electric motor 76 rotates and is driven to the third transmission 77 by using the input shaft of the third transmission 77. Power is output to the output shaft of the third transmission 77 through gear transmission inside the third transmission 77, and is supplied to the electric vehicle for running by using the second transmission system 4. Specifically, for a power transmission path of the electric vehicle, refer to FIG. 17.

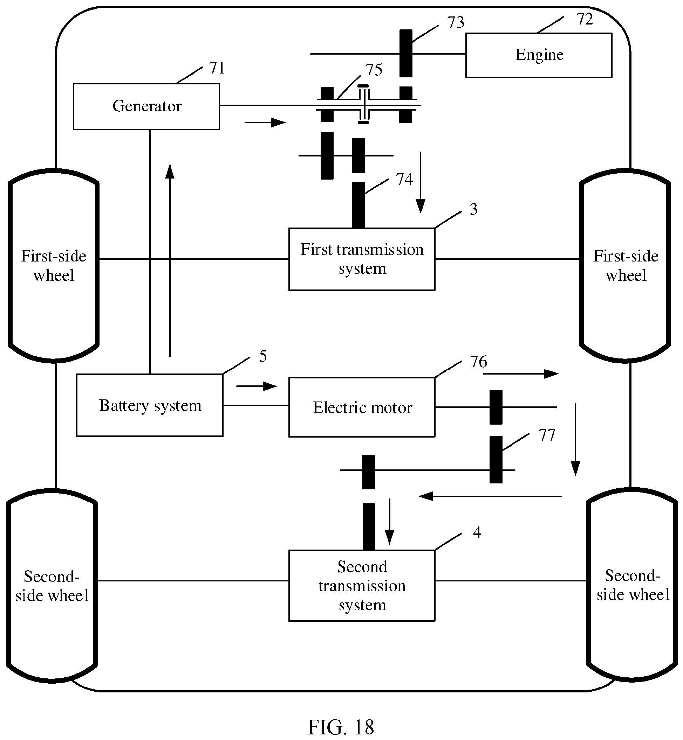

When the electric vehicle runs normally, if the remaining capacity of the battery system 5 can meet the current power requirement of the electric vehicle, and the electric vehicle has a high power requirement, the battery system 5 may output the stored electric energy to the electric motor 76, and the electric motor 76 rotates and is driven to the third transmission 77 by using the input shaft of the third transmission 77. Power is output to the output shaft of the third transmission 77 through gear transmission inside the third transmission 77, and is supplied to the electric vehicle for running by using the second transmission system 4. At the same time, the battery system 5 outputs the stored electric energy to the generator 71, and the synchronizer 75 is in transmission connection to a gear inside the second transmission 74. The generator 71 rotates as a motor and is driven to the second transmission 74 by using the input shaft of the second transmission 74. Power is output to the output shaft of the second transmission 74 through gear transmission inside the second transmission 74, and is supplied to the electric vehicle for running by using the first transmission system 3. Specifically, for a power transmission path of the electric vehicle, refer to FIG. 18.

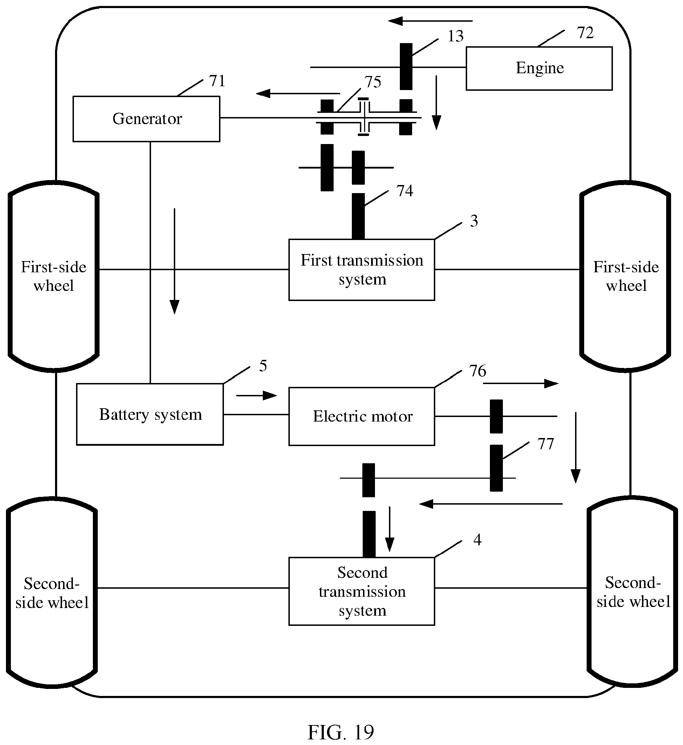

When the electric vehicle runs normally, if the remaining capacity of the battery system 5 cannot meet the current power requirement of the electric vehicle and the electric vehicle has a low power requirement, the synchronizer 75 controls the engine 72 to engage with the generator 71, the engine 72 drives the generator 71 to rotate, and the generator 71 generates electric energy and outputs the generated electric energy to the connected battery system 5. At the same time, the battery system 5 outputs the stored electric energy to the electric motor 76, and the electric motor 76 rotates and is driven to the third transmission 77 by using the input shaft of the third transmission 77. Power is output to the output shaft of the third transmission 77 through gear transmission inside the third transmission 77, and is supplied to the electric vehicle for running by using the second transmission system 4. Specifically, for a power transmission path of the electric vehicle, refer to FIG. 19.

In actual use, to eliminate vibration in a driving process of the electric vehicle and improve driving experience of a driver, a shock absorber, for example, a torque shock absorber or a dual-mass flywheel, may be further connected between the generator 71 and the synchronizer 75.

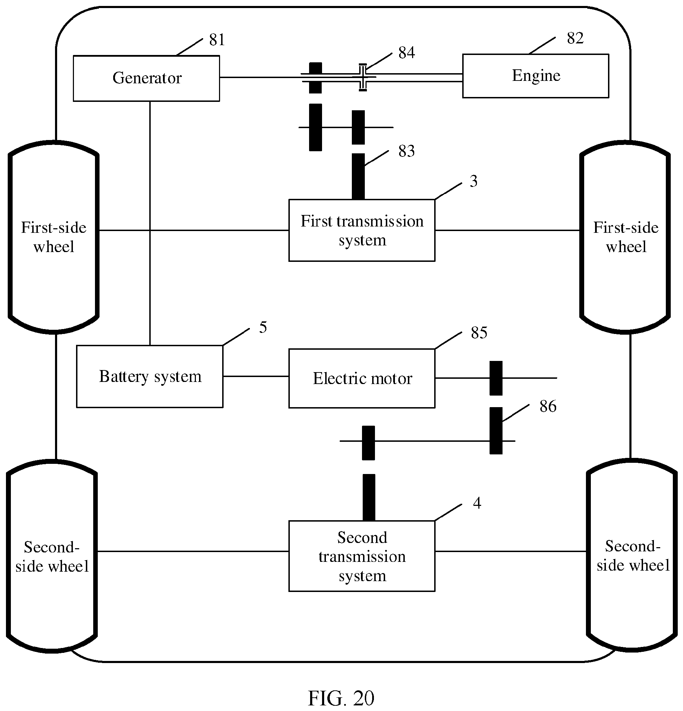

With reference to FIG. 16 to FIG. 19, in the foregoing embodiment, the engine and the generator may be at a same speed. In this case, as shown in FIG. 20, a first powertrain 1 may include a generator 81, an engine 82, a first transmission 83, and a synchronizer 84. A second powertrain 2 includes an electric motor 85 and a third transmission 86. The first transmission 83 and the synchronizer 84 constitute a connection assembly.

In specific implementation, coupling teeth of the synchronizer 84 are separately connected to an input shaft of the first transmission 83 and the engine 82, and a gear hub of the synchronizer 84 is connected to the generator 81. The input shaft of the first transmission 83 is connected to the generator 81, and an output shaft of the first transmission 83 is connected to the first transmission system 3. An input shaft of the third transmission 86 is connected to the electric motor 85, and an output shaft of the third transmission 86 is connected to the second transmission system 4. Both the first generator 81 and the electric motor 85 are connected to the battery system 5.

It should be understood that, when the synchronizer 84 connects the engine 82 to the generator 81, the engine 82 may drive the generator 81 to generate electric energy, and the generator 81 may output the generated electric energy to the battery system 5. When the synchronizer 84 connects the generator 81 to the first transmission system 3, the generator 81 may drive the first-side wheels by using the first transmission system 3.

It should be noted that a drive mode of the electric vehicle drive system shown in FIG. 20 is the same as the drive mode shown in FIG. 16, and is not repeatedly described in this application.

This application further provides an electric vehicle. The electric vehicle includes wheels, first-side wheels, second-side wheels, and the electric vehicle drive system in any one of the foregoing solutions. When a powertrain in the electric vehicle drives the electric vehicle to run, a generator may be used as an electric motor to drive the electric vehicle, to implement generator reuse, so that a separate motor does not need to be configured, a quantity of components in the electric vehicle drive system is reduced, driving costs of the electric vehicle are reduced, and available space for passengers is increased.

The foregoing descriptions are merely specific implementations of this application, but are not intended to limit the protection scope of this application. Any variation or replacement readily figured out by a person skilled in the art within the technical scope disclosed in the appended claims shall fall within the protection scope of this application. Therefore, the protection scope of this application shall be subject to the protection scope of the claims.

## Claims

1. A hybrid electric vehicle drive system, comprising a first powertrain (1), a second powertrain (2), a first transmission system (3), a second transmission system (4), and a battery system (5), wherein
the first powertrain is connected to the first transmission system, and the first transmission system is in transmission connection to first-side wheels of an electric vehicle;
the second powertrain is connected to the second transmission system, and the second transmission system is in transmission connection to second-side wheels of the electric vehicle;
the first powertrain comprises a generator (11; 21; 31; 41; 51; 61; 71; 81) and an engine (12; 22; 32; 42; 52; 62; 72; 82), and the engine is configured to drive the generator to generate electric energy, or drive the first-side wheels by using the first transmission system; and the generator is configured to drive the first-side wheels by using the first transmission system, or output the generated electric energy to the battery system;
the second powertrain is configured to drive the second-side wheels by using the second transmission system; and
the battery system is connected to the generator and the second powertrain, and is configured to receive the electric energy output by the generator, and output stored electric energy to the second powertrain and/or the generator;
wherein the first powertrain further comprises a connection assembly;
the engine (12; 22; 32; 42; 52; 62; 72; 82) and the generator (11; 21; 31; 41; 51; 61; 71; 81) are in transmission connection by using the connection assembly;
the engine and the first transmission system are in transmission connection by using the connection assembly; and
the generator and the first transmission system (3) are in transmission connection by using the connection assembly.
wherein the connection assembly comprises a first transmission (13), a second transmission (14), a first clutch (15), and a second clutch (16);
an input shaft of the first transmission is connected to the engine (12) by using the first clutch, and an output shaft of the first transmission is connected to the generator (11);
an input shaft of the second transmission is connected to the generator by using the second clutch, and an output shaft of the second transmission is connected to the first transmission system;
when the first clutch is engaged, the engine drives the generator to generate the electric energy, and the generator outputs the generated electric energy to the battery system;
when the second clutch is engaged, the generator drives the first-side wheels by using the first transmission system; and
when the first clutch and the second clutch are engaged, the engine drives the first-side wheels by using the first transmission system.

2. The hybrid electric vehicle drive system according to claim 1, wherein the second powertrain comprises an electric motor (17; 26; 36; 45; 56; 65; 76; 85) and a third transmission (18; 27; 37; 46; 57; 66; 77; 86); and
the electric motor is connected to the battery system (5); an input shaft of the third transmission is connected to the electric motor, and an output shaft of the third transmission is connected to the second transmission system (4).

3. The hybrid electric vehicle drive system according to claim 1 or 2, wherein the first transmission (13; 23; 33; 43; 53; 63; 73; 83) comprises a speed reducer or a speed increaser.

4. A hybrid electric vehicle, comprising a vehicle body, first-side wheels, second-side wheels, and the hybrid electric vehicle drive system according to any one of claims 1 to 3.

## Patentansprüche

1. Antriebssystem für ein Hybridelektrofahrzeug, das einen ersten Antriebsstrang (1), einen zweiten Antriebsstrang (2), ein erstes Getriebesystem (3), ein zweites Getriebesystem (4) und ein Batteriesystem (5) umfasst, wobei
der erste Antriebsstrang mit dem ersten Getriebesystem verbunden ist und das erste Getriebesystem in Getriebeverbindung mit Rädern auf der ersten Seite eines Elektrofahrzeugs steht;
der zweite Antriebsstrang mit dem zweiten Getriebesystem verbunden ist und das zweite Getriebesystem in Getriebeverbindung mit Rädern auf der zweiten Seite des Elektrofahrzeugs steht;
der erste Antriebsstrang einen Generator (11; 21; 31; 41; 51; 61; 71; 81) und einen Motor (12; 22; 32; 42; 52; 62; 72; 82) umfasst und der Motor konfiguriert ist, um den Generator anzutreiben, um elektrische Energie zu erzeugen, oder die Räder auf der ersten Seite durch Verwenden des ersten Getriebesystems anzutreiben; und der Generator konfiguriert ist, um die Räder auf der ersten Seite durch Verwenden des ersten Getriebesystems anzutreiben oder die erzeugte elektrische Energie an das Batteriesystem auszugeben;
der zweite Antriebsstrang konfiguriert ist, um die Räder auf der zweiten Seite durch Verwenden des zweiten Getriebesystems anzutreiben; und
das Batteriesystem mit dem Generator und dem zweiten Antriebsstrang verbunden ist und konfiguriert ist, um die durch den Generator ausgegebene elektrische Energie aufzunehmen und gespeicherte elektrische Energie an den zweiten Antriebsstrang und/oder den Generator auszugeben;
wobei der erste Antriebsstrang ferner eine Verbindungsbaugruppe umfasst;
der Motor (12; 22; 32; 42; 52; 62; 72; 82) und der Generator (11; 21; 31; 41; 51; 61; 71; 81) durch Verwenden der Verbindungsbaugruppe in Getriebeverbindung stehen;
der Motor und das erste Getriebesystem durch Verwenden der Verbindungsbaugruppe in Getriebeverbindung stehen; und
der Generator und das erste Getriebesystem (3) durch Verwenden der Verbindungsbaugruppe in Getriebeverbindung stehen.
wobei die Verbindungsbaugruppe ein erstes Getriebe (13), ein zweites Getriebe (14), eine erste Kupplung (15) und eine zweite Kupplung (16) umfasst;
eine Eingangswelle des ersten Getriebes durch Verwenden der ersten Kupplung mit dem Motor (12) verbunden ist und eine Ausgangswelle des ersten Getriebes mit dem Generator (11) verbunden ist;
eine Eingangswelle des zweiten Getriebes durch Verwenden der zweiten Kupplung mit dem Generator verbunden ist und eine Ausgangswelle des zweiten Getriebes mit dem ersten Getriebesystem verbunden ist;
wenn die erste Kupplung betätigt ist, der Motor den Generator antreibt, um elektrische Energie zu erzeugen, und der Generator die erzeugte elektrische Energie an das Batteriesystem abgibt;
wenn die zweite Kupplung betätigt ist, der Generator die Räder auf der ersten Seite durch Verwenden des ersten Getriebesystems antreibt; und
wenn die erste Kupplung und die zweite Kupplung betätigt sind, der Motor die Räder auf der ersten Seite durch Verwenden des ersten Getriebesystems antreibt.

2. Antriebssystem für ein Hybridelektrofahrzeug nach Anspruch 1, wobei der zweite Antriebsstrang einen Elektromotor (17; 26; 36; 45; 56; 65; 76; 85) und ein drittes Getriebe (18; 27; 37; 46; 57; 66; 77; 86) umfasst; und
der Elektromotor mit dem Batteriesystem (5) verbunden ist; eine Eingangswelle des dritten Getriebes mit dem Elektromotor verbunden ist und eine Ausgangswelle des dritten Getriebes mit dem zweiten Getriebesystem (4) verbunden ist.

3. Antriebssystem für ein Hybridelektrofahrzeug nach Anspruch 1 oder 2, wobei das erste Getriebe (13; 23; 33; 43; 53; 63; 73; 83) einen Drehzahlminderer oder einen Drehzahlerhöher umfasst.

4. Hybridelektrofahrzeug, das eine Fahrzeugkarosserie, Räder auf der ersten Seite, Räder auf der zweiten Seite und das Antriebssystem für ein Hybridelektrofahrzeug nach einem der Ansprüche 1 bis 3 umfasst.

## Revendications

1. Système d'entraînement de véhicule électrique hybride, comprenant un premier groupe motopropulseur (1), un second groupe motopropulseur (2), un premier système de transmission (3), un second système de transmission (4) et un système de batteries (5), dans lequel
le premier groupe motopropulseur est relié au premier système de transmission, et le premier système de transmission est en liaison de transmission avec des roues de premier côté d'un véhicule électrique ;
le second groupe motopropulseur est relié au second système de transmission, et le second système de transmission est en liaison de transmission avec des roues de second côté du véhicule électrique ;
le premier groupe motopropulseur comprend un générateur (11 ; 21 ; 31 ; 41 ; 51 ; 61 ; 71 ; 81) et un moteur à combustion (12 ; 22 ; 32 ; 42 ; 52 ; 62 ; 72 ; 82), et le moteur à combustion est configuré pour entraîner le générateur afin de générer de l'énergie électrique, ou pour entraîner les roues de premier côté en utilisant le premier système de transmission ; et le générateur est configuré pour entraîner les roues de premier côté en utilisant le premier système de transmission, ou pour fournir de l'énergie électrique générée au système de batteries ;
le second groupe motopropulseur est configuré pour entraîner les roues de second côté en utilisant le second système de transmission ; et
le système de batteries est connecté au générateur et au second groupe motopropulseur, et est configuré pour recevoir de l'énergie électrique produite par le générateur, et fournir de l'énergie électrique stockée au second groupe motopropulseur et/ou au générateur ; dans lequel le premier groupe motopropulseur comprend en outre un ensemble de liaison ;
le moteur à combustion (12 ; 22 ; 32 ; 42 ; 52 ; 62 ; 72 ; 82) et le générateur (11 ; 21 ; 31 ; 41 ; 51 ; 61 ; 71 ; 81) sont en liaison de transmission en utilisant de l'ensemble de liaison ;
le moteur à combustion et le premier système de transmission sont en liaison de transmission en utilisant l'ensemble de liaison ; et
le générateur et le premier système de transmission (3) sont en liaison de transmission en utilisant l'ensemble de liaison,
dans lequel l'ensemble de liaison comprend une première transmission (13), une deuxième transmission (14), un premier embrayage (15) et un second embrayage (16) ;
un arbre d'entrée de la première transmission est relié au moteur à combustion (12) en utilisant le premier embrayage, et un arbre de sortie de la première transmission est relié au générateur (11) ;
un arbre d'entrée de la deuxième transmission est relié au générateur en utilisant le second embrayage, et un arbre de sortie de la deuxième transmission est relié au premier système de transmission ;
lorsque le premier embrayage est enclenché, le moteur à combustion entraîne le générateur afin de générer de l'énergie électrique, et le générateur fournit l'énergie électrique générée au système de batteries ;
lorsque le second embrayage est enclenché, le générateur entraîne les roues de premier côté en utilisant le premier système de transmission ; et
lorsque le premier embrayage et le second embrayage sont enclenchés, le moteur à combustion entraîne les roues de premier côté en utilisant le premier système de transmission.

2. Système d'entraînement de véhicule électrique hybride selon la revendication 1, dans lequel le second groupe motopropulseur comprend un moteur électrique (17 ; 26 ; 36 ; 45 ; 56 ; 65 ; 76 ; 85) et une troisième transmission (18 ; 27 ; 37 ; 46 ; 57 ; 66 ; 77 ; 86) ; et le moteur électrique est relié au système de batteries (5) ; un arbre d'entrée de la troisième transmission est relié au moteur électrique, et un arbre de sortie de la troisième transmission est relié au second système de transmission (4).

3. Système d'entraînement de véhicule électrique hybride selon la revendication 1 ou 2, dans lequel la première transmission (13 ; 23 ; 33 ; 43 ; 53 ; 63 ; 73 ; 83) comprend un réducteur de vitesse ou un multiplicateur de vitesse.

4. Véhicule électrique hybride, comprenant une carrosserie, des roues de premier côté, des roues de second côté et le système d'entraînement de véhicule électrique hybride selon l'une quelconque des revendications 1 à 3.
